# EUROPEAN PATENT SPECIFICATION

(11) **EP 4 424 638 B1**
(45) Date of publication and mention of the grant of the patent: **19.08.2026**
(21) Application number: 22886112.6
(22) Date of filing: 28.10.2022
(51) Int. Cl.: C01B 39/38, B01J 29/40

(54) **ZSM-5 MOLECULAR SIEVE, PREPARATION METHOD THEREFOR AND APPLICATION THEREOF, HYDROTREATMENT CATALYST, HYDRODEWAXING CATALYST, AND APPLICATIONS THEREOF**
ZSM-5-MOLEKULARSIEB, HERSTELLUNGSVERFAHREN DAFÜR UND ANWENDUNG DAVON, HYDROBEHANDLUNGSKATALYSATOR, HYDROENTPARAFFINIERUNGSKATALYSATOR UND ANWENDUNGEN DAVON
TAMIS MOLÉCULAIRE ZSM-5, SON PROCÉDÉ DE PRÉPARATION ET APPLICATION ASSOCIÉE, CATALYSEUR D'HYDROTRAITEMENT, CATALYSEUR D'HYDRODÉPARAFFINAGE ET APPLICATIONS ASSOCIÉES

(30) Priority: 29.10.2021 CN 202111269100
(43) Date of publication of application: 04.09.2024
(73) Proprietor: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: HAO, Wenyue, Liaoning 116045 (CN); LIU, Chang, Liaoning 116045 (CN); GUO, Junhui, Liaoning 116045 (CN); CAO, Junfeng, Liaoning 116045 (CN); WANG, Fenglai, Liaoning 116045 (CN)
(74) Representative: karo IP
(86) International application number: PCT/CN2022/128201
(87) International publication number: WO 2023/072237

(56) References cited:
- CN-A- 107 973 318
- CN-A- 110 193 377
- CN-A- 113 548 674
- US-A- 4 247 388
- US-A- 4 372 839
- US-A- 4 563 266
- US-B1- 7 077 948
- 张威毅等 (ZHANG, WEIYI ET AL.): "ZSM-5分子筛改性及其柴油加氢降凝性能的研究 (Study on Modification of ZSM-5 Zeolite and Its Hydrodewaxing Performance for Production of Low Freezing Point Diesel)", 当代化工 (CONTEMPORARY CHEMICAL INDUSTRY), vol. 49, no. 7, 28 July 2020 (2020-07-28)

## Description

### TECHNICAL FIELD

The present invention relates to the technical field of molecular sieves and the preparation method thereof in particular to a ZSM-5 molecular sieve, a preparation method and an application thereof, a hydrotreatment catalyst, a hydrodewaxing catalyst, and applications thereof.

### BACKGROUND ART

The first molecular sieve belonging to the "Pentasil" family, named ZSM-5 molecular sieve, was successfully synthesized by the Mobile Corporation by using tetraethyl ammonium hydroxide as a template agent in 1972. The appearance of said molecular sieve marked a milestone for the development of the molecular sieves. In 1978, Kokotailo et al structurally analyzed the ZSM-5 molecular sieve and confirmed that the molecular sieve had a three-dimensional double ten-membered ring pore canal structure, which was composed of a straight pore canal and a sinusoidal pore canal, the two sets of ten-membered ring pore canals exhibited an orthogonal relationship, wherein the straight ten-membered ring pore canal was parallel to the b-axis and had a pore diameter of 0.53×0.56nm, and the sinusoidal ten-membered ring pore canal was parallel to the a-axis and had a pore diameter of 0.51×0.55nm, the crystal cell parameters were a=2.017nm, b=1.996nm, and c=1.343nm, such a pore structure characteristic endowed the molecular sieve with the shape selective and catalytic properties. The hydrodewaxing reaction utilized the ten-membered ring pore canals of the molecular sieve, wherein the molecular dynamics sizes of most cyclic hydrocarbons and isomeric alkanes were larger than those of the ZSM-5 molecular sieve, thus the most cyclic hydrocarbons and isomeric alkanes cannot enter into the pore canals for carrying out reaction, thereby realizing the selective cracking of the chain hydrocarbons with poor low-temperature fluidity. The ZSM-5 molecular sieve raw powder suffered from side reactions due to the existence of pore openings and acidity on the outer surface, and the catalytic performance of the raw powder was influenced.

In order to obtain a catalyst with high para-position selectivity and reaction stability, the ZSM-5 molecular sieve must be modified. US7077948B1 discloses treatment of ZSM-5 zeolite with ammonium hexafluorosilicate. The silanization treatment of the molecular sieve is a frequently used and relatively effective method for modifying the acidity of an outer surface. The current silanization process can be classified into the following methods: (1) vacuum chemical vapor deposition method; (2) flow chemical vapor deposition method; (3) liquid phase chemical impregnation method; (4) reflux liquid phase deposition method; (5) chemical reaction deposition method, although the methods have different processes, each method aims to eliminate the outer surface acid center by loading amorphous silica on the outer surface of the molecular sieve through deposition. However, the traditional silanization method needs to be repeated many times, and circulates the impregnation process to fulfill the purpose of eliminating the outer surface acidity, which leads to the waste of a large amount of the silicon ester and the significantly reduced efficiency of the modification process; although the improved chemical reaction deposition method improves the modification efficiency and the utilization rate of silicon ester, the method needs special operations, which causes that the process is complicated, and inevitably brings about the problem of pore canal blockage.

### CONTENTS OF INVENTION

Aiming to overcome the defects in the prior art, the present application provides a ZSM-5 molecular sieve, a preparation method and an application thereof, a hydrotreatment catalyst, a hydrodewaxing catalyst, and applications thereof. The ZSM-5 molecular sieve can be widely used as a carrier or an active component, for example, the ZSM-5 molecular sieve can be used as the carrier for preparing a catalyst, which is utilized in the process of hydrodewaxing straight-run diesel oil blended with a portion of catalytic diesel oil and/or coking diesel oil, and can simultaneously improve the quality and yield of low freezing point diesel oil.

In the first aspect, the invention provides a ZSM-5 molecular sieve, wherein the ZSM-5 molecular sieve has a pyridine infrared total acid amount within the range of 0.03-0.40 mmol/g, and a di-tert-butylpyridine infrared total acid amount within the range of 0.002-0.02 mmol/g; and the mesoporous pore volume of the ZSM-5 molecular sieve accounts for 10-20% of the total pore volume, and/or in the ZSM-5 molecular sieve, the mesoporous pore volume of 2-10 nm accounts for 70-95% of the total mesoporous pore volume.

In the second aspect, the present invention provides a preparation method for the ZSM-5 molecular sieve according to the invention, the method comprises the following steps:
(1) subjecting a raw material ZSM-5 molecular sieve to a hydrothermal treatment;
(2) removing non-framework aluminum in the molecular sieve obtained in step (1);
(3) impregnating the material obtained in step (2) with a pore canal protection solution;
(4) treating the material obtained in step (3) with an organic acid;
(5) mixing the material obtained in step (4) with a dealuminizing and silicon supplementing reagent to dealuminize and supplement silicon;
(6) filtering, washing, drying, and roasting the material obtained in step (5).

In the third aspect, the invention provides a use of the molecular sieve as a carrier and/or a catalyst active component, preferably as a hydrogenation catalyst carrier.

In the fourth aspect, the invention provides a hydrotreatment catalyst comprising a ZSM-5 molecular sieve and a hydrogenation active component according to the invention.

In the fifth aspect, the invention provides a hydrodewaxing catalyst, the catalyst comprises the ZSM-5 molecular sieve according to the invention, preferably, the hydrodewaxing catalyst comprises the ZSM-5 molecular sieve and the group VIII metal component, wherein the ZSM-5 molecular sieve is contained in an amount of 30-90%, and the group VIII metal component is contained in an amount of 5-40% calculated in terms of oxide, based on the weight of said catalyst.

In the sixth aspect, the invention provides a use of the hydrodewaxing catalyst in the hydrodewaxing of oil products; preferably, the oil product is a mixture of straight-run diesel oil and catalytic diesel oil and/or coking diesel oil.

Compared with the prior art, the invention has the following advantages:
1. The ZSM-5 molecular sieve of the invention has a low di-tert-butylpyridine infrared total acid amount and exhibits a suitable mesoporous distribution while eliminating the mesoporous acid and external surface acid, the ZSM-5 molecular sieve can be widely used as a carrier or an active component, for example, the ZSM-5 molecular sieve can be used as the carrier for preparing a catalyst, which is utilized in the process of hydrodewaxing straight-run diesel oil blended with a portion of catalytic diesel oil and/or coking diesel oil, and can simultaneously improve the quality and yield of low freezing point diesel oil.
2. The preparation method of the ZSM-5 molecular sieve according to the invention has many advantages, firstly, a certain amount of mesopores are obtained through the hydrothermal treatment, the non-framework aluminum is then removed such that the pore canals are more unblocked, the acid centers in non-zigzag pore canals are selectively removed in a pore canal protection mode, a majority of aluminum sites in non-zigzag pore canals are replaced by the silicon atoms without acidity under the action of a dealuminizing and silicon supplementing reagent so that the molecular sieve structure is completely reserved.

In the preferred embodiment of the invention, a small number of acid centers on the outer surface and in mesopores of the molecular sieve can be reserved as required, so that the molecular sieve has better performance advantages, for example, when the molecular sieve is used in a hydrodewaxing catalyst, a small amount of polycyclic aromatic hydrocarbons in raw materials, which can be easily adsorbed, may be subjected to hydrogenation ring opening on weak acid sites in the mesopores and on the outer surface so that the diesel quality is improved, the monocyclic hydrocarbons and isomeric chain hydrocarbons which have a high mass amount and low condensation point are difficult to enter the microporous pore canals of ZSM-5 molecular sieve and are reserved in products due to poor competitive adsorption capacity. The adsorption capacity of the normal alkane is weaker than the aromatic hydrocarbon, and the normal alkane does not dominate in competitive adsorption outside the pore canal so the normal alkane enters the micropore canals to perform shape-selective cracking reaction to obtain a primary cracked product with a reduced condensation point, the reduced amount of outer surface acid center prevents the cracked product from being further cracked into smaller-molecular non-diesel components, the unblocked pore canal enables the primary cracked product to diffuse away from the pore canals in time, the secondary cracking is reduced, and finally the low condensation point diesel yield is greatly improved.

### DESCRIPTION OF FIGURES

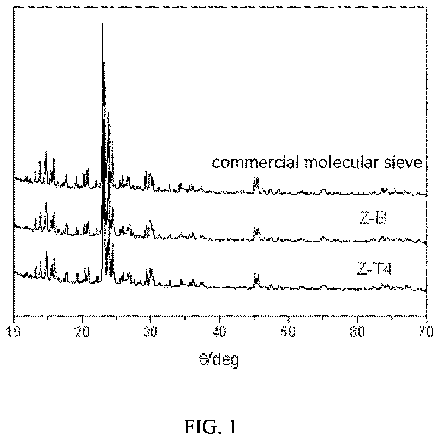

FIG. 1 illustrates an X-ray diffraction (XRD) diagram of a commercially available ZSM-5 molecular sieve, a ZSM-5 molecular sieve Z-T4 obtained in Example 4 of the present invention, and a molecular sieve Z-B obtained in Comparative Example 1.

### SPECIFIC MODE FOR CARRYING OUT THE INVENTION

The functions and effects of the technical solution of the present invention will be further described below with reference to the Examples and Comparative Examples, but the following Examples are not intended to limit the protection scope of the invention.

The present invention provides a ZSM-5 molecular sieve, wherein the ZSM-5 molecular sieve has a pyridine infrared total acid amount within the range of 0.03-0.40 mmol/g (e.g., 0.03mmol/g, 0.04mmol/g, 0.05mmol/g, 0.06mmol/g, 0.07mmol/g, 0.08mmol/g, 0.09mmol/g, 0.10mmol/g, 0.11mmol/g, 0.12mmol/g, 0.13mmol/g, 0.14mmol/g, 0.15mmol/g, 0.16mmol/g, 0.17mmol/g, 0.18mmol/g, 0.19mmol/g, 0.20mmol/g, 0.21mmol/g, 0.22mmol/g, 0.23mmol/g, 0.24mmol/g, 0.25mmol/g, 0.26mmol/g, 0.27mmol/g, 0.28mmol/g, 0.29mmol/g, 0.30mmol/g, 0.31mmol/g, 0.32mmol/g, 0.33mmol/g, 0.34mmol/g, 0.35mmol/g, 0.36mmol/g, 0.37mmol/g, 0.38mmol/g, 0.39mmol/g, 0.40mmol/g), and a di-tert-butylpyridine infrared total acid amount within the range of 0.002-0.02 mmol/g (e.g., 0.002mmol/g, 0.003mmol/g, 0.004mmol/g, 0.005mmol/g, 0.006mmol/g, 0.007mmol/g, 0.008mmol/g, 0.009mmol/g, 0.010mmol/g, 0.011mmol/g, 0.012mmol/g, 0.013mmol/g, 0.014mmol/g, 0.015mmol/g, 0.016mmol/g, 0.017mmol/g, 0.018mmol/g, 0.019/g, 0.020 mmol/g); the mesoporous pore volume of the ZSM-5 molecular sieve accounts for 10-20% of the total pore volume, for example, 10%, 11%, 12%, 13%, 14%, 15%, 16%, 17%, 18%, 19%, 20%; and/or in the ZSM-5 molecular sieve, the mesoporous pore volume of 2-10 nm accounts for 70-95% of the total mesoporous pore volume, such as 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%.

According to a preferred embodiment of the invention, the ZSM-5 molecular sieve has a pyridine infrared total acid amount within the range of 0.10-0.20 mmol/g (e.g., 0.10mmol/g, 0.11mmol/g, 0.12mmol/g, 0.13mmol/g, 0.14mmol/g, 0.15mmol/g, 0.16mmol/g, 0.17mmol/g, 0.18mmol/g, 0.19mmol/g, 0.20mmol/g); and a di-tert-butylpyridine infrared total acid amount within the range of 0.005-0.01 mmol/g (e.g., 0.005mmol/g, 0.006mmol/g, 0.007mmol/g, 0.008mmol/g, 0.009mmol/g, 0.010mmol/g).

According to a preferred embodiment of the invention, the ratio of the outer surface SiO₂/Al₂O₃ molar ratio of said ZSM-5 molecular sieve to the total SiO₂/Al₂O₃ molar ratio of said ZSM-5 molecular sieve is within the range of (2-100):1, preferably within the range of (5-30): 1, for example, 5:1, 6:1, 7:1, 8:1, 10:1, 11:1, 12:1, 13:1, 14:1, 15:1, 16:1, 17:1, 18:1, 19:1, 20:1, 21:1, 22:1, 23:1, 24:1, 25:1, 26:1, 27:1, 28:1, 29:1, 30: 1.

According to a preferred embodiment of the invention, the outer surface SiO₂/Al₂O₃ molar ratio of said ZSM-5 molecular sieve is within the range of 200-1,000, preferably within the range of 500-1,000.

According to a preferred embodiment of the invention, the total SiO₂/Al₂O₃ molar ratio of said ZSM-5 molecular sieve is within the range of 30-100, preferably within the range of 40-70.

According to a preferred embodiment of the invention, the mesoporous pore volume of the ZSM-5 molecular sieve accounts for 10-20% of the total pore volume.

According to a preferred embodiment of the invention, in the ZSM-5 molecular sieve, the mesoporous pore volume of 2-10nm accounts for 70-95% of the total mesoporous pore volume.

Each of the molecular sieves having the foregoing properties of the invention can achieve the objects of the present invention, the invention does not impose particular requirements on the preparation method thereof; according to a preferred embodiment of the present invention, the invention provides a preparation method of the ZSM-5 molecular sieve, the method comprises the following steps:
(1) subjecting a raw material ZSM-5 molecular sieve to a hydrothermal treatment;
(2) removing non-framework aluminum in the molecular sieve obtained in step (1);
(3) impregnating the material obtained in step (2) with a pore canal protection solution;
(4) treating the material obtained in step (3) with an organic acid;
(5) mixing the material obtained in step (4) with a dealuminizing and silicon supplementing reagent to dealuminize and supplement silicon;
(6) filtering, washing, drying, and roasting the material obtained in step (5).

In the invention, the ZSM-5 molecular sieve raw material may be a commercially available product or a microporous hydrogen type ZSM-5 molecular sieve prepared according to the prior art. Preferably, the ZSM-5 molecular sieve raw material has the following properties: the SiO₂/Al₂O₃ molar ratio is within the range of 30-100, the specific surface area is within the range of 300-450 m²/g, and the pore volume is within the range of 0.15-0.20 cm³/g.

According to a preferred embodiment of the present invention, in step (1), the temperature of the hydrothermal treatment is within the range of 400-700°C, preferably within the range of 500-600°C.

According to the present invention, the time of the hydrothermal treatment is adjusted depending on the temperature, and in the present invention, the time of the hydrothermal treatment is preferably within the range of 0.5-5h, more preferably within the range of 1-2h.

According to the present invention, the pressure of the hydrothermal treatment is adjusted depending on the temperature, and in the present invention, the pressure of the hydrothermal treatment is within the range of 0.05-0.5MPa, preferably within the range of 0.1-0.3MPa.

In the present invention, the methods for removing non-framework aluminum may be various, including but not limited to removing non-framework aluminum with a buffer solution, wherein the buffer solution is a mixed solution of the weak acid and/or weak base and corresponding salt thereof, the mixed solution can counteract and alleviate the influence of the added strong acid or strong base on the pH value of the solution to a certain extent, thereby keeping relative stability of the pH value of the solution.

Unless otherwise specified in the present invention, the solution refers to an aqueous solution.

In the present invention, the weak acid is preferably an inorganic acid and/or an organic acid that has a molecular size of less than 0.5nm and can be removed in a mode of not damaging the structure of molecular sieve.

According to a preferred embodiment of the present invention, the inorganic acid is one or more of phosphoric acid, carbonic acid, and boric acid.

According to a preferred embodiment of the present invention, the inorganic acid salt is one or more of ammonium phosphate salt, ammonium carbonate salt, and ammonium borate salt.

According to a preferred embodiment of the present invention, the organic acid is selected from C2-C6 monobasic acid or polybasic acid, preferably one or more selected from the group consisting of citric acid, formic acid, acetic acid, oxalic acid, propionic acid, malonic acid, butyric acid, and succinic acid.

According to a preferred embodiment of the invention, the organic acid salt is selected from C2-C6 monoacid or polybasic acid salts, preferably one or more selected from the group consisting of ammonium citrate, ammonium formate, ammonium acetate, ammonium oxalate, ammonium propionate, ammonium malonate, ammonium butyrate, and ammonium succinate.

According to a preferred embodiment of the present invention, more preferably, the buffer solution is one or more of oxalic acid-ammonium oxalate solution and acetic acid-ammonium acetate solution.

According to a preferred embodiment of the present invention, the buffer solution is acidic, and the pH value of the buffer solution is preferably within the range of 4.5-6.5.

According to a preferred embodiment of the present invention, the molar concentration of the organic acid in the buffer solution is within the range of 0.1-1.0 mol/L.

The dosage of the buffer solution in the invention may be selected from a wide range. According to a preferred embodiment of the invention, the liquid-solid volume ratio of the buffer solution to the molecular sieve obtained in step (1) is within the range of 3: 1-10: 1.

According to a preferred embodiment of the invention, the process of step (2) comprises: mixing and stirring the molecular sieve obtained in step (1) and a buffer solution, and then carrying out a solid-liquid separation; optionally repeating the above operations for 2-4 times; according to the invention, preferably, the treatment temperature is within the range of 40-80°C, and the treatment time is adjusted depending on the temperature, the treatment time is preferably within the range of 0.5-3h.

In the present invention, the pore canal protecting agent of the pore canal protection solution is an inorganic alkali and/or an organic alkali that has a molecular size of less than 0.5nm and can be removed through roasting in a mode of not damaging the structure of molecular sieve, such as one or more selected from the group consisting of aqua ammonia, ethylenediamine, propylamine, tetramethylammonium hydroxide, tetraethylammonium hydroxide, tetrapropylammonium hydroxide, tetramethylammonium bromide and tetraethylammonium bromide.

According to a preferred embodiment of the present invention, in step (3), the pore canal protecting agent of the pore canal protection solution is one or more selected from the group consisting of isopropylamine, tetramethylammonium hydroxide, tetraethylammonium hydroxide, and tetrapropylammonium hydroxide.

According to a preferred embodiment of the present invention, preferably, the pore canal protection solution is an aqueous solution of a pore canal protection agent, preferably one or more selected from the group consisting of isopropylamine solution, tetraethylammonium hydroxide solution, and tetrapropylammonium hydroxide solution.

According to a preferred embodiment of the invention, preferably, the concentration of the pore canal protection solution is within the range of 0.8-2.0 mol/L.

The present invention does not impose specific requirements on the impregnation method, and in the present invention, the impregnation is an equivalent-volume impregnation.

According to a preferred embodiment of the invention, the impregnation treatment temperature is within the range of 20-25°C.

In the present invention, the organic acid in step (4) is an organic acid that has a molecular size within the range from 0.55nm to 2nm and can be removed through roasting in a mode of not damaging the structure of molecular sieve. For example, one or more selected from the group consisting of the C7-C10 organic acids.

According to a preferred embodiment of the invention, the organic acid is one or more selected from the group consisting of 2-methylbenzoic acid, 2-methylbenzenesulfonic acid, 2,4-dimethylbenzenesulfonic acid, 2,4-dimethylbenzoic acid, 1,2,5-trimethylbenzenesulfonic acid, and 1,2,5-trimethylbenzoic acid.

According to a preferred embodiment of the present invention, it is further preferred that the organic acid in step (4) is one or more of 2,4-dimethylbenzenesulfonic acid and 2,4-dimethylbenzoic acid.

According to a preferred embodiment of the invention, the treatment process of step (4) comprises the following steps: mixing the material obtained in step (3) with water, preferably, the liquid-solid volume ratio of the water to the material obtained in step (3) is within the range of 2: 1-6: 1; and then adding an organic acid until the pH value of said solution is reduced to below 8, preferably within the range of 6.5-7.5.

In the present invention, the selectable range of the kinds of the dealuminizing and silicon supplementing reagent in step (5) is wide, and according to a preferred embodiment of the invention, the dealuminizing and silicon supplementing substance of the dealuminizing and silicon supplementing reagent is one or more selected from the group consisting of fluosilicic acid, fluosilicate (including but not limited to ammonium hexafluorosilicate, fluosilicic acid, sodium fluorosilicate), silicon halide (including but not limited to silicon tetrachloride, silicon tetrafluoride) and silicate ester (including but not limited to ethyl orthosilicate), preferably one or more selected from the group consisting of ammonium hexafluorosilicate, fluosilicic acid, sodium fluosilicate, silicon tetrachloride, silicon tetrafluoride and ethyl orthosilicate; more preferably, the dealuminizing and silicon supplementing reagent is at least one of ammonium hexafluorosilicate solution and tetraethoxysilane solution.

According to a preferred embodiment of the invention, the molar concentration of the dealuminizing and silicon supplementing reagent is within the range of 0.3-1.0 mol/L

According to the invention, the dosage of the dealuminizing and silicon supplementing reagent can be selected from a wide range, and according to a preferred embodiment of the invention, the quality ratio of the material obtained in step (4) to the dealuminizing and silicon supplementing reagent is within the range of 1: 1-1: 5.

According to a preferred embodiment of the present invention, in step (5), the mixing temperature is within the range of 60-100°C.

According to a preferred embodiment of the present invention, the operation procedure of step (5) comprises the following steps: heating the material obtained in step (4) to the temperature range of 60-100°C, continuously stirring, dropwise adding a dealuminizing and silicon supplementing reagent, and continuously stirring for 60-120min after completion of the dropwise adding process.

According to a preferred embodiment of the present invention, the filtering and washing in step (6) are preferably performed by using a conventional method in the art, the drying temperature is within the range of 100-150°C, the drying time is within the range of 2-4 hours; the roasting temperature is within the range of 400-600°C; the roasting time is within the range of 3-5h.

The invention provides a use of the molecular sieve as a carrier and/or a catalyst active component, preferably as a hydrogenation catalyst carrier.

The present invention provides a hydrotreatment catalyst, the hydrotreatment catalyst comprising a ZSM-5 molecular sieve and a hydrogenation active component according to the invention; preferably, the hydrogenation active component is one or more selected from the group consisting of the group VIB metals, the group VIIB metals, and the group VIII metals, preferably one or more selected from the group consisting of Pt, Pd, Ni, W, Mo, and Co.

The present invention provides a hydrodewaxing catalyst comprising the ZSM-5 molecular sieve according to the invention.

According to a preferred embodiment of the present invention, preferably, the hydrodewaxing catalyst comprises the ZSM-5 molecular sieve and the Group VIII metal component, wherein the ZSM-5 molecular sieve is contained in an amount of 30-90%, and the Group VIII metal component is contained in an amount of 5-40% calculated in terms of oxide, based on the weight of said catalyst.

The present invention provides a use of the hydrodewaxing catalyst according to the invention in the hydrodewaxing of oil products; preferably, the oil product is a mixture of straight-run diesel oil and catalytic diesel oil and/or coking diesel oil.

According to a preferred embodiment of the invention, the outer surface SiO₂/Al₂O₃ molar ratio of said ZSM-5 molecular sieve is within the range of 200-1,000, the total SiO₂/Al₂O₃ molar ratio of said ZSM-5 molecular sieve is within the range of 30-100, the ZSM-5 molecular sieve has a pyridine infrared total acid amount within the range of 0.03-0.40 mmol/g, and a di-tert-butylpyridine infrared total acid amount within the range of 0.002-0.02 mmol/g; and the mesoporous pore volume of the ZSM-5 molecular sieve accounts for 10-20% of the total pore volume.

According to a preferred embodiment of the invention, preferably, the ZSM-5 molecular sieve has an outer surface SiO₂/Al₂O₃ molar ratio within the range of 500-1,000, and the total SiO₂/Al₂O₃ molar ratio within the range of 40-70.

According to a preferred embodiment of the present invention, preferably, the ZSM-5 molecular sieve has a pyridine infrared total acid amount within the range of 0.10-0.20 mmol/g, and a di-tert-butylpyridine infrared total acid amount within the range of 0.005-0.01 mmol/g.

According to a preferred embodiment of the present invention, preferably, the mesopores in the ZSM-5 molecular sieve are concentrated in the pore diameter of 2-10nm, wherein the mesoporous pore volume of 2-10 nm accounts for 70-95% of the total mesoporous pore volume. In the present invention, the mesoporous pores refer to the pores having a pore diameter of 2-50nm.

According to a preferred embodiment of the present invention, the invention provides a preparation method for the ZSM-5 molecular sieve, the method comprises the following steps:
(1) subjecting a raw material ZSM-5 molecular sieve to a hydrothermal treatment;
(2) removing non-framework aluminum in the molecular sieve obtained in step (1);
(3) impregnating the material obtained in step (2) with a pore canal protection solution;
(4) treating the material obtained in step (3) with an organic acid;
(5) mixing the material obtained in step (4) with a dealuminizing and silicon supplementing reagent to dealuminize and supplement silicon;
(6) filtering, washing, drying, and roasting the material obtained in step (5).

According to a preferred embodiment of the present invention, it is preferable in step (1), the temperature of the hydrothermal treatment is within the range of 400-700°C, more preferably within the range of 500-600°C; the time of the hydrothermal treatment is within the range of 0.5-5h, more preferably within the range of 1-2h; the pressure of the hydrothermal treatment is within the range of 0.05-0.5MPa, more preferably within the range of 0.1-0.3MPa.

According to a preferred embodiment of the present invention, preferably in step (2), the method of removing non-framework aluminum may be the method of removing non-framework aluminum with a buffer solution. The buffer solution in use is one or more of oxalic acid-ammonium oxalate solution and acetic acid-ammonium acetate solution. The pH value of the buffer solution is within the range of 4.5-6.5, preferably within the range of 5.0-6.0. The molar concentration of the organic acid in the buffer solution is within the range of 0.1-1.0 mol/L. The liquid-solid volume ratio of the buffer solution to the molecular sieve obtained in step (1) is within the range of 3: 1-10: 1.

According to a preferred embodiment of the present invention, the specific treatment process in step (2) preferably comprises: mixing and stirring the molecular sieve obtained in step (1) and a buffer solution, wherein the treatment temperature is within the range of 40-80°C, and the treatment time is within the range of 0.5-3h, the mixture is then subjected to a solid-liquid separation (e.g., a suction filtration); and the above operations are repeated for 2-4 times.

According to a preferred embodiment of the present invention, the pore canal protection solution in step (3) is preferably one or more selected from the group consisting of isopropylamine solution, tetraethylammonium hydroxide solution, and tetrapropylammonium hydroxide solution. The concentration of the pore canal protection solution is within the range of 0.8-2.0 mol/L, preferably within the range of 1.1-1.5 mol/L.

According to a preferred embodiment of the present invention, the impregnation in step (3) is preferably an equivalent-volume impregnation. The impregnation treatment temperature is the normal atmospheric temperature, generally within the range of 20-25°C.

According to a preferred embodiment of the present invention, the organic acid in step (4) is preferably one or more of 2,4-dimethylbenzenesulfonic acid and 2,5-dimethylbenzoic acid .

According to a preferred embodiment of the present invention, the specific operations are preferably as follows: initially mixing the material obtained in step (3) with water, wherein the liquid-solid volume ratio of the water to the material obtained in step (3) is within the range of 2: 1-6: 1; and then adding an organic acid until the pH value of said solution is reduced to below 8, preferably within the range of 6.5-7.5.

According to a preferred embodiment of the present invention, the dealuminizing and silicon supplementing reagent in step (5) is preferably at least one of ammonium hexafluorosilicate solution and tetraethoxysilane solution. The molar concentration of the dealuminizing and silicon supplementing reagent is within the range of 0.3-1.0 mol/L. The quality ratio of the material obtained in step (4) to the dealuminizing and silicon supplementing reagent is within the range of 1: 1-1: 5. The mixing temperature is within the range of 60-100°C.

According to a preferred embodiment of the present invention, the specific operation procedure of step (5) preferably comprises the following steps: rapidly heating the material obtained in step (4) to the temperature range of 60-100°C, continuously stirring, dropwise adding a dealuminizing and silicon supplementing reagent, and continuously stirring for 60-120min after completion of the dropwise adding process. Wherein the dropwise adding rate is not more than 0.5 mL/min·g of the material obtained in step (4); preferably within the range of 0.2-0.4 mL/min·g of the material obtained in step (4).

According to a preferred embodiment of the present invention, the filtering and washing in step (6) are preferably performed by using a conventional method in the art, the drying temperature is within the range of 100-150°C, the drying time is within the range of 2-4 hours; the roasting temperature is within the range of 400-600°C; the roasting time is within the range of 3-5h.

According to a preferred embodiment of the present invention, the invention provides a hydrodewaxing catalyst comprising the aforementioned ZSM-5 molecular sieve.

According to a preferred embodiment of the present invention, preferably, the hydrodewaxing catalyst comprises the ZSM-5 molecular sieve and the group VIII metal component, wherein the ZSM-5 molecular sieve is contained in an amount of 30-90%, more preferably 40-70%, and the group VIII metal component is contained in an amount of 5-40%, more preferably 10-30% calculated in terms of oxide, based on the weight of said catalyst.

According to a preferred embodiment of the present invention, preferably, the hydrodewaxing catalyst comprises the ZSM-5 molecular sieve, alumina and group VIII metal components, wherein the ZSM-5 molecular sieve is contained in an amount of 30-50%, the alumina is contained in an amount of 40-70%, and the group VIII metal component is contained in an amount of 5-40% calculated in terms of oxide, based on the weight of said catalyst.

According to a preferred embodiment of the present invention, the group VIII metal is preferably cobalt and/or nickel.

According to a preferred embodiment of the invention, the invention provides a use of the hydrodewaxing catalyst in the hydrodewaxing of the raw oil.

According to a preferred embodiment of the present invention, the use preferably comprises: in the presence of hydrogen gas, the raw oil is subjected to the reaction under the action of the hydrodewaxing catalyst to obtain the low-freezing point diesel.

According to a preferred embodiment of the present invention, preferably, the reaction conditions for hydrodewaxing in the use are as follows: the reaction pressure is within the range of 5.0-8.0MPa, the volume ratio of hydrogen to oil is within the range of 400: 1-600: 1, the liquid hourly volume space velocity is within the range of 0.5-2h⁻¹, and the reaction temperature is within the range of 280-400°C.

According to a preferred embodiment of the present invention, the raw oil is preferably a mixture of straight-run diesel oil, catalytic diesel oil, and/or coking diesel oil. In the raw oil, the total blending amount of the catalytic diesel oil and/or coking diesel oil is within the range of 20-40%, the quality content of wax (normal alkane with carbon atom number more than 20) is within the range of 5-15%, and the quality content of polycyclic aromatic hydrocarbons is within the range of 10-30%. The distillation range of the raw oil is generally within the range of 150-400°C.

Unless otherwise specified in the present invention, the % involved in Examples and Comparative Examples refers to the mass fraction.

In the invention, the outer surface SiO₂/Al₂O₃ molar ratio was measured by the X-ray photoelectron spectroscopy (XPS), the composition and the state of elements on the catalyst surface were measured by using the Multilab2000 type electron spectrometer manufactured by the ThermoFisher Corporation in the United States of America (USA), an excitation source was Mg Kα, the cathode voltage and current were 13kV and 20 mA respectively. The electron binding energy was calibrated with C1s (284.6eV).

In the invention, the total SiO₂/Al₂O₃ molar ratio was obtained by analyzing the X-ray fluorescence (XRF) spectrum, the ZSX100e X-ray fluorescence spectrometer was adopted, the spectral line was Kα, the crystal was Li F1, the target material was Rh, the detector was SC scintillation, the timing was 20s, and the light path atmosphere was vacuum.

In the invention, the specific surface area, the pore volume, and the pore distribution were determined by the following measuring methods: the ASAP 2420 low-temperature liquid nitrogen physical adsorption instrument manufactured by the MICROMERITICS in the United States of America (USA) was adopted, and the pretreatment temperature was 300°C, and the pretreatment time was 4h.

In the invention, the measuring method of the pyridine infrared total acid amount was as follows: the powdered ZSM-5 molecular sieve was compressed into tablets, which were subjected to vacuumizing, and then degassing at 450°C for 2h. When the temperature was reduced to room temperature, pyridine molecules were used as probe molecules, an infrared spectrogram of chemical desorption was measured, and the adsorption quantity was calculated.

In the invention, the di-tert-butylpyridine infrared total acid amount was referred to as the protonic acid which can be contacted by the 2,6-di-tert-butylpyridine molecule with a kinetics diameter of 10.5Å. The measurement method of the di-tert-butylpyridine infrared total acid amount was as follows: the powdered ZSM-5 molecular sieve was compressed into tablets, which were subjected to vacuumizing, and then degassing at 450°C for 2h. When the temperature was reduced to room temperature, the 2,6-di-tert-butyl pyridine molecules were used as probe molecules, an infrared spectrogram of chemical desorption was measured, and the adsorption quantity was calculated.

The ZSM-5 raw powder involved in the Examples and the Comparative Examples was a commercially available commodity, it was a microporous hydrogen type ZSM-5 molecular sieve, and the properties of the ZSM-5 molecular sieve were as follows: the specific surface area was 405m²/g, the pore volume was 0.182cm³/g, the water absorption rate was 55%, and the SiO₂/Al₂O₃ (molar) ratio was 31.2.

### Example 1

30g of the commercially available ZSM-5 raw powder was placed in a hydrothermal treatment furnace, and subjected to the treatment at 500°C and under the pressure of 0.1MPa for 2h, the obtained material was placed in 300mL of oxalic acid-ammonium oxalate solution with the pH value of 6.0, wherein the molar concentration of oxalic acid was 0.3mol/L, the mixture was stirred and heated to 60°C, the mixture was subjected to suction filtration for 30min, and the process was repeated for 3 times. 16.5mL of isopropylamine solution with a concentration of 1.1 mol/L was then used for performing an equivalent-volume impregnation, and standing still for 10 min; 170mL of water was added, 2,5-xylene sulfonic acid was dropwise added until the pH value was 6.5, the mixture was stirred and heated to 60°C, 90mL of ammonium hexafluorosilicate solution with a concentration of 0.3mol/L was dropwise added at a constant speed by a peristaltic pump, the dropwise adding rate was 0.2 mL/min·g, and the temperature was kept at 60°C and the stirring was continued for 90min. The suction filtration was performed while the solution was hot, 300mL of water was added into the obtained filter cake, then heated to 60°C and the temperature was preserved for 20min, the suction filtration was performed while the filter cake was hot, the filter cake was dried at 120°C for 24h, and then roasted at 500°C for 3h, the molecular sieve denoted as Z-T1 was prepared.

### Example 2

30g of the commercially available ZSM-5 raw powder was placed in a hydrothermal treatment furnace, and subjected to the treatment at 530°C and under the pressure of 0.1MPa for 2h, the obtained material was placed in 300mL of acetic acid-ammonium acetate solution with the pH value of 6.0, wherein the molar concentration of acetic acid was 0.2mol/L, the mixture was stirred and heated to 60°C, the mixture was subjected to suction filtration for 30min, and the process was repeated for 3 times. 16.5mL of tetraethylammonium hydroxide solution with a concentration of 1.2 mol/L was then used for performing an equivalent-volume impregnation, and standing still for 10 min; 170mL of water was added, 2,5-dimethylbenzoic acid was dropwise added until the pH value was 7.0, the mixture was stirred and heated to 65°C, 90mL of ammonium hexafluorosilicate solution with a concentration of 0.5mol/L was dropwise added at a constant speed by a peristaltic pump, the dropwise adding rate was 0.2 mL/min·g, and the temperature was kept at 65°C and the stirring was continued for 90min. The suction filtration was performed while the solution was hot, 300mL of water was added into the obtained filter cake, then heated to 60°C and the temperature was preserved for 20min, the suction filtration was performed while the filter cake was hot, the filter cake was dried at 120°C for 24h, and then roasted at 500°C for 3h, the molecular sieve denoted as Z-T2 was prepared.

### Example 3

30g of the commercially available ZSM-5 raw powder was placed in a hydrothermal treatment furnace, and subjected to the treatment at 550°C and under the pressure of 0.1MPa for 2h, the obtained material was placed in 300mL of oxalic acid-ammonium oxalate solution with the pH value of 5.5, wherein the molar concentration of oxalic acid was 0.4mol/L, the mixture was stirred and heated to 70°C, the mixture was subjected to suction filtration for 30min, and the process was repeated for 3 times. 16.5mL of tetrapropylammonium hydroxide solution with a concentration of 1.2 mol/L was then used for performing an equivalent-volume impregnation on the obtained material, and standing still for 10 min; 170mL of water was added, 2,4-dimethylbenzenesulfonic acid was dropwise added until the pH value was 6.5, the mixture was stirred and heated to 65°C, 90mL of tetraethoxysilane solution with a concentration of 0.6mol/L was dropwise added at a constant speed by a peristaltic pump, the dropwise adding rate was 0.3 mL/min·g, and the temperature was kept at 65°C and the stirring was continued for 90min. The suction filtration was performed while the solution was hot, 300mL of water was added into the obtained filter cake, then heated to 60°C and the temperature was preserved for 20min, the suction filtration was performed while the filter cake was hot, the filter cake was dried at 120°C for 24h, and then roasted at 500°C for 3h, the molecular sieve denoted as Z-T3 was prepared.

### Example 4

30g of the commercially available ZSM-5 raw powder was placed in a hydrothermal treatment furnace, and subjected to the treatment at 550°C and under the pressure of 0.15MPa for 2h, the obtained material was placed in 300mL of oxalic acid-ammonium oxalate solution with the pH value of 5.5, wherein the molar concentration of oxalic acid was 0.4mol/L, the mixture was stirred and heated to 80°C, the mixture was subjected to suction filtration for 30min, and the process was repeated for 3 times. 16.5mL of isopropylamine solution with a concentration of 1.2 mol/L was then used for performing an equivalent-volume impregnation on the obtained material, and standing still for 10 min; 170mL of water was added, 2,4-xylene sulfonic acid was dropwise added until the pH value was 7.0, the mixture was stirred and heated to 65°C, 90g of ammonium hexafluorosilicate solution with a concentration of 0.6mol/L was dropwise added at a constant speed by a peristaltic pump, the dropwise adding rate was 0.3 mL/min·g, and the temperature was kept at 65°C and the stirring was continued for 90min. The suction filtration was performed while the solution was hot, 300mL of water was added into the obtained filter cake, then heated to 60°C and the temperature was preserved for 20min, the suction filtration was performed while the filter cake was hot, the filter cake was dried at 120°C for 24h, and then roasted at 500°C for 3h, the molecular sieve denoted as Z-T4 was prepared.

### Example 5

30g of the commercially available ZSM-5 raw powder was placed in a hydrothermal treatment furnace, and subjected to the treatment at 550°C and under the pressure of 0.15MPa for 2h, the obtained material was placed in 300mL of oxalic acid-ammonium oxalate solution with the pH value of 5.0, wherein the molar concentration of oxalic acid was 0.3mol/L, the mixture was stirred and heated to 60°C, the mixture was subjected to suction filtration for 30min, and the process was repeated for 3 times. 16.5mL of isopropylamine solution with a concentration of 1.2 mol/L was then used for performing an equivalent-volume impregnation, and standing still for 10 min; 170mL of water was added, 2,4-dimethylbenzoic acid was dropwise added until the pH value was 7.0, the mixture was stirred and heated to 65°C, 90mL of ammonium hexafluorosilicate solution with a concentration of 0.6mol/L was dropwise added at a constant speed by a peristaltic pump, the dropwise adding rate was 0.3 mL/min·g, and the temperature was kept at 65°C and the stirring was continued for 90min. The suction filtration was performed while the solution was hot, 300mL of water was added into the obtained filter cake, then heated to 60°C and the temperature was preserved for 20min, the suction filtration was performed while the filter cake was hot, the filter cake was dried at 120°C for 24h, and then roasted at 500°C for 3h, the molecular sieve denoted as Z-T5 was prepared.

### Example 6

30g of the commercially available ZSM-5 raw powder was placed in a hydrothermal treatment furnace, and subjected to the treatment at 550°C and under the pressure of 0.15MPa for 2h, the obtained material was placed in 300mL of acetic acid-ammonium acetate solution with the pH value of 5.0, wherein the molar concentration of acetic acid was 0.3mol/L, the mixture was stirred and heated to 60°C, the mixture was subjected to suction filtration for 30min, and the process was repeated for 3 times. 16.5mL of tetraethylammonium hydroxide solution with a concentration of 1.3 mol/L was then used for performing an equivalent-volume impregnation on the obtained material, and standing still for 10 min; 170mL of water was added, 2,4-dimethylbenzenesulfonic acid was dropwise added until the pH value was 7.5, the mixture was stirred and heated to 65°C, 90mL of ammonium hexafluorosilicate solution with a concentration of 0.6mol/L was dropwise added at a constant speed by a peristaltic pump, the dropwise adding rate was 0.3 mL/min·g, and the temperature was kept at 65°C and the stirring was continued for 90min. The suction filtration was performed while the solution was hot, 300mL of water was added into the obtained filter cake, then heated to 60°C and the temperature was preserved for 20min, the suction filtration was performed while the filter cake was hot, the filter cake was dried at 120°C for 24h, and then roasted at 500°C for 3h, the molecular sieve denoted as Z-T6 was prepared.

### Example 7

30g of the commercially available ZSM-5 raw powder was placed in a hydrothermal treatment furnace, and subjected to the treatment at 570°C and under the pressure of 0.15MPa for 2h, the obtained material was placed in 300mL of acetic acid-ammonium acetate solution with the pH value of 5.0, wherein the molar concentration of acetic acid was 0.5mol/L, the mixture was stirred and heated to 60°C, the mixture was subjected to suction filtration for 30min, and the process was repeated for 3 times. 16.5mL of isopropylamine solution with a concentration of 1.5 mol/L was then used for performing an equivalent-volume impregnation on the obtained material, and standing still for 10 min; 170mL of water was added, 2,4-dimethylbenzoic acid was dropwise added until the pH value was 7.5, the mixture was stirred and heated to 65°C, 90mL of ethyl orthosilicate solution with a concentration of 0.8mol/L was dropwise added at a constant speed by a peristaltic pump, the dropwise adding rate was 0.4 mL/min·g, and the temperature was kept at 65°C and the stirring was continued for 90min. The suction filtration was performed while the solution was hot, 300mL of water was added into the obtained filter cake, then heated to 60°C and the temperature was preserved for 20min, the suction filtration was performed while the filter cake was hot, the filter cake was dried at 120°C for 24h, and then roasted at 500°C for 3h, the molecular sieve denoted as Z-T7 was prepared.

### Example 8

30g of the commercially available ZSM-5 raw powder was placed in a hydrothermal treatment furnace, and subjected to the treatment at 570°C and under the pressure of 0.2MPa for 2h, the obtained material was placed in 300mL of oxalic acid-ammonium oxalate solution with the pH value of 5.0, wherein the molar concentration of oxalic acid was 0.5mol/L, the mixture was stirred and heated to 60°C, the mixture was subjected to suction filtration for 30min, and the process was repeated for 3 times. 16.5mL of isopropylamine solution with a concentration of 1.5 mol/L was then used for performing an equivalent-volume impregnation on the obtained material, and standing still for 10 min; 170mL of water was added, 2,4-dimethylbenzoic acid was dropwise added until the pH value was 7.5, the mixture was stirred and heated to 65°C, 90mL of ammonium hexafluorosilicate solution with a concentration of 1.0mol/L was dropwise added at a constant speed by a peristaltic pump, the dropwise adding rate was 0.4 mL/min·g, and the temperature was kept at 65°C and the stirring was continued for 90min. The suction filtration was performed while the solution was hot, 300mL of water was added into the obtained filter cake, then heated to 60°C and the temperature was preserved for 20min, the suction filtration was performed while the filter cake was hot, the filter cake was dried at 120°C for 24h, and then roasted at 500°C for 3h, the molecular sieve denoted as Z-T8 was prepared.

### Comparative Example 1

30g of the commercially available ZSM-5 raw powder was placed in a hydrothermal treatment furnace, and subjected to the treatment at 550°C and under the pressure of 0.15MPa for 2h, the obtained material was placed in 300mL of oxalic acid-ammonium oxalate solution with the pH value of 5.0, wherein the molar concentration of oxalic acid was 0.3mol/L, the mixture was stirred and heated to 60°C, the mixture was subjected to suction filtration for 30min, and the process was repeated for 3 times. The filter cake was dried at 120°C for 24h and then roasted at 500°C for 3h, the molecular sieve denoted as Z-B was prepared.

### Comparative Example 2

30g of the commercially available ZSM-5 raw powder was placed in a hydrothermal treatment furnace, and subjected to the treatment at 550°C and under the pressure of 0.15MPa for 2h, the obtained material was placed in 300mL of oxalic acid-ammonium oxalate solution with the pH value of 5.0, wherein the molar concentration of oxalic acid was 0.3mol/L, the mixture was stirred and heated to 60°C, the mixture was subjected to suction filtration for 30min, and the process was repeated for 3 times. 90mL of ammonium hexafluorosilicate solution with a concentration of 0.6mol/L was dropwise added into the obtained material at a constant speed by a peristaltic pump, the dropwise adding rate was 0.3 mL/min·g, and the temperature was kept at 65°C and the stirring was continued for 90min. The suction filtration was performed while the solution was hot, the filter cake was dried at 120°C for 24h and then roasted at 500°C for 3h, and the molecular sieve denoted as Z-C was prepared.

### Comparative Example 3

30g of the commercially available ZSM-5 raw powder was placed in a hydrothermal treatment furnace, and subjected to the treatment at 550°C and under the pressure of 0.15MPa for 2h, 16.5mL of isopropylamine solution with the concentration of 0.6 mol/L was used for performing an equivalent-volume impregnation on the obtained material, and standing still for 10 min; 170mL of water was added, 2,4-dimethylbenzoic acid was dropwise added until the pH value was 7.0, the mixture was stirred and heated to 65°C, 90mL of ammonium hexafluorosilicate solution with a concentration of 0.6mol/L was dropwise added at a constant speed by a peristaltic pump, the dropwise adding rate was 0.3 mL/min·g, and the temperature was kept at 65°C and the stirring was continued for 90min. The suction filtration was performed while the solution was hot, 300mL of water was added into the obtained filter cake, then heated to 60°C and the temperature was preserved for 20min, the suction filtration was performed while the filter cake was hot, the filter cake was dried at 120°C for 24h, and then roasted at 500°C for 3h, the molecular sieve denoted as Z-D was prepared.

### Comparative Example 4

30g of the commercially available ZSM-5 raw powder was stirred and heated to 65°C, 180mL of ammonium hexafluorosilicate solution with a concentration of 1.0mol/L was dropwise added at a constant speed by a peristaltic pump, the dropwise adding rate was 0.4 mL/min·g, and the temperature was kept at 65°C and the stirring was continued for 90min. The suction filtration was performed while the solution was hot, the filter cake was dried at 120°C for 24h and then roasted at 500°C for 3h, and the molecular sieve denoted as Z-E was prepared.

**Table 1 Characterization results of the molecular sieves obtained in Examples and Comparative Examples**

| No. of molecul ar sieve | Outer surface SiO₂/Al₂ O₃ molar ratio | Total SiO₂/Al₂ O₃ molar ratio | The pyridi ne infrare d total acid amoun t, mmol/ g | The di-tert-butylp yridine infrared total acid amount, *10⁻³mmol/g | The percentage of the mesoporo us pore volume to the total pore volum, % | The percentage of the mesoporous pore volume of 2-10nm to the total mesoporous pore volume, % |
|---|---|---|---|---|---|---|
| Z-T1 | 517 | 48.3 | 0.27 | 12.1 | 11.2 | 87 |
| Z-T2 | 560 | 45.4 | 0.29 | 12.0 | 11.5 | 85 |
| Z-T3 | 661 | 58.3 | 0.19 | 8.1 | 13.7 | 82 |
| Z-T4 | 989 | 54.7 | 0.20 | 5.3 | 13.3 | 82 |
| Z-T5 | 996 | 64.3 | 0.15 | 4.5 | 15.8 | 79 |
| Z-T6 | 680 | 62.8 | 0.17 | 13.2 | 15.9 | 77 |
| Z-T7 | 658 | 82.5 | 0.09 | 12.3 | 18.9 | 75 |
| Z-T8 | 715 | 81.6 | 0.12 | 11.6 | 19.1 | 72 |
| Z-B | 38.5 | 38.7 | 0.35 | 101 | 10.8 | 85 |
| Z-C | 94.5 | 94.3 | 0.06 | 46 | 10.9 | 86 |
| Z-D | 542 | 40.0 | 0.31 | 22.3 | 2.5 | 53 |
| Z-E | 952 | 56.7 | 0.18 | 5.8 | 1.3 | 21 |

### Example 9

The molecular sieve was prepared according to the same method in Example 5, except that the buffer solution in use was citric acid-ammonium citrate solution with a pH value of 5.0, the molecular sieve denoted as Z-T9 was prepared.

### Example 10

The molecular sieve was prepared according to the same method in Example 5, except that the pore canal protection solution was aqua ammonia with a concentration of 1.2 mol/L, the molecular sieve denoted as Z-T10 was prepared.

### Example 11

The molecular sieve was prepared according to the same method in Example 5, except that the organic acid in step (4) was 2-methylbenzenesulfonic acid, the molecular sieve denoted as Z-T11 was prepared.

### Example 12

The molecular sieve was prepared according to the same method in Example 5, except that the dealuminizing and silicon supplementing reagent was the fluosilicic acid solution with a concentration of 0.6 mol/L, the molecular sieve denoted as Z-T12 was prepared.

### Example 13

The catalysts were prepared by using the molecular sieves Z-T1 to Z-T12 obtained in Examples 1-12 respectively, wherein the preparation process was as follows: the calcined molecular sieves, macroporous alumina (with a specific surface area of 302 m²/g and a pore volume of 0.96 cm³/g), and an alumina sol binder were subjected to blending and kneading, extruding and molding, and subsequently subjected to drying and calcining to obtain the carriers; the carriers were impregnated in a nickel nitrate impregnation solution, and then subjected to drying and roasting to obtain the catalysts which were respectively denoted as C1-C12; wherein the mass fraction of the molecular sieve was 30wt%, the mass fraction of the macroporous alumina was 50wt%, the mass fraction of NiO was 10wt%, and the balance was the binder.

10g of catalysts C1-C12 were respectively taken and placed in a fixed bed reactor, and the hydrodewaxing reaction was performed under the conditions comprising the reaction pressure of 6.0MPa, the hydrogen/oil volume ratio of 500:1, the liquid hourly volume space velocity of 10h⁻¹, and the reaction temperature of 320°C, wherein the properties of the raw materials were shown in Table 2, and the product distribution and properties were illustrated in Table 3.

**Table 2 The properties of oil products**

| Type of raw material | Daqing oilfield mixed oil of straight-run diesel and catalytic diesel |
|---|---|
| Density (20°C), kg/m³ | 864.0 |
| Distillation range, °C | 165-365 |
| Condensation point, °C | 18 |
| Wax content, wt% | 11.0 |
| Content of polycyclic aromatic hydrocarbons, wt% | 15 |
| Freezing point, °C | 5 |

**Table 3 Application results of catalysts in Examples**

| No. of catalyst | Total liquid yield, wt% | Naphtha yield, wt% | Diesel yield, wt% | Diesel condensation point, °C | Cetane number of diesel |
|---|---|---|---|---|---|
| C1 | 93.0 | 16.0 | 77.0 | -44 | 53.5 |
| C2 | 94.4 | 16.1 | 78.3 | -43 | 55.1 |
| C3 | 95.7 | 13.1 | 82.6 | -45 | 56.0 |
| C4 | 97.1 | 11.9 | 85.2 | -46 | 58.7 |
| C5 | 99.4 | 11.9 | 87.5 | -45 | 62.7 |
| C6 | 98.1 | 12.1 | 86.0 | -38 | 64.5 |
| C7 | 98.4 | 11.9 | 86.5 | -34 | 64.4 |
| C8 | 98.9 | 11.8 | 87.1 | -32 | 63.8 |
| C9 | 89.2 | 18.9 | 72.3 | -42 | 52.1 |
| C10 | 94.9 | 14.7 | 80.2 | -35 | 54.1 |
| C11 | 95.8 | 16.9 | 78.9 | -33 | 55.2 |
| C12 | 90.1 | 17.6 | 72.5 | -43 | 54.5 |

### Comparative Example 5

The commercially available ZSM-5 molecular sieve, macroporous alumina (with a specific surface area of 302 m²/g and a pore volume of 0.96 cm³/g), and an alumina sol binder were subjected to blending and kneading, extruding, and molding, and subsequently subjected to drying and calcining to obtain a carrier; the carrier was impregnated in a nickel nitrate impregnation solution, and then subjected to drying and roasting to obtain the catalyst denoted as DC1; wherein the mass fraction of the molecular sieve was 30wt%, the mass fraction of the macroporous alumina was 50wt%, the mass fraction of NiO was 10wt%, and the balance was the binder.

10g of the catalyst DC1 was weighed and placed in a fixed bed reactor and the hydrodewaxing reaction was performed under the conditions comprising the reaction pressure of 6.0MPa, the hydrogen/oil volume ratio of 500:1, the liquid hourly volume space velocity of 10h⁻¹, and the reaction temperature of 340°C, wherein the properties of the raw materials were shown in Table 2, and the product distribution and properties were illustrated in Table 4.

**Table 4 Application results of the catalyst prepared by using the commercially available molecular sieve**

| No. of catalyst | Total liquid yield, wt% | Naphtha yield, wt% | Diesel yield, wt% | Diesel condensation point, °C | Cetane number of diesel |
|---|---|---|---|---|---|
| DC1 | 86.7 | 47.1 | 39.6 | -43 | 50.3 |

### Comparative Example 6

The molecular sieve Z-B, macroporous alumina (with a specific surface area of 302 m²/g and a pore volume of 0.96 cm³/g), and an alumina sol binder were subjected to blending and kneading, extruding and molding, and subsequently subjected to drying and calcining to obtain a carrier; the carrier was impregnated in a nickel nitrate impregnation solution, and then subjected to drying and roasting to obtain the catalyst denoted as DC2; wherein the mass fraction of the ZSM-5 molecular sieve was 30wt%, the mass fraction of the macroporous alumina was 50wt%, the mass fraction of NiO was 10wt%, and the balance was the binder.

10g of the catalyst DC2 was weighed and placed in a fixed bed reactor, and the hydrodewaxing reaction was performed under the conditions comprising the reaction pressure of 6.0MPa, the hydrogen/oil volume ratio of 500:1, the liquid hourly volume space velocity of 10h⁻¹, and the reaction temperature of 340°C, wherein the properties of the raw materials were shown in Table 2, and the product distribution and properties were illustrated in Table 5.

**Table 5 Application results of the catalyst prepared by using the Z-B molecular sieve**

| No. of catalyst | Total liquid yield, wt% | Naphtha yield, wt% | Diesel yield, wt% | Diesel condensation point, °C | Cetane number of diesel |
|---|---|---|---|---|---|
| DC2 | 87.3 | 25.1 | 72.2 | -40 | 53.2 |

### Comparative Example 7

The molecular sieve Z-C, macroporous alumina (with a specific surface area of 302 m²/g and a pore volume of 0.96 cm³/g), and an alumina sol binder were subjected to blending and kneading, extruding and molding, and subsequently subjected to drying and calcining to obtain a carrier; the carrier was impregnated in a nickel nitrate impregnation solution, and then subjected to drying and roasting to obtain the catalyst denoted as DC3; wherein the mass fraction of the ZSM-5 molecular sieve was 30wt%, the mass fraction of the macroporous alumina was 50wt%, the mass fraction of NiO was 10wt%, and the balance was the binder.

10g of the catalyst DC3 was weighed and placed in a fixed bed reactor, and the hydrodewaxing reaction was performed under the conditions comprising the reaction pressure of 6.0MPa, the hydrogen/oil volume ratio of 500:1, the liquid hourly volume space velocity of 10h⁻¹, and the reaction temperature of 340°C, wherein the properties of the raw materials were shown in Table 2, and the product distribution and properties were illustrated in Table 6.

**Table 6 Application results of the catalyst prepared by using the Z-C molecular sieve**

| No. of catalyst | Total liquid yield, wt% | Naphtha yield, wt% | Diesel yield, wt% | Diesel condensation point, °C | Cetane number of diesel |
|---|---|---|---|---|---|
| DC3 | 99.3 | 5.1 | 94.2 | -10 | 59.2 |

### Comparative Example 8

The molecular sieve Z-D, macroporous alumina (with a specific surface area of 302 m²/g and a pore volume of 0.96 cm³/g), and an alumina sol binder were subjected to blending and kneading, extruding and molding, and subsequently subjected to drying and calcining to obtain a carrier; the carrier was impregnated in a nickel nitrate impregnation solution, and then subjected to drying and roasting to obtain the catalyst denoted as DC4; wherein the mass fraction of the ZSM-5 molecular sieve was 30wt%, the mass fraction of the macroporous alumina was 50wt%, the mass fraction of NiO was 10wt%, and the balance was the binder.

10g of the catalyst DC4 was weighed and placed in a fixed bed reactor, and the hydrodewaxing reaction was performed under the conditions comprising the reaction pressure of 6.0MPa, the hydrogen/oil volume ratio of 500:1, the liquid hourly volume space velocity of 10h⁻¹, and the reaction temperature of 340°C, wherein the properties of the raw materials were shown in Table 2, and the product distribution and properties were illustrated in Table 7.

**Table 7 Application results of the catalyst prepared by using the Z-D molecular sieve**

| No. of catalyst | Total liquid yield, wt% | Naphtha yield, wt% | Diesel yield, wt% | Diesel condensation point, °C | Cetane number of diesel |
|---|---|---|---|---|---|
| DC4 | 94.3 | 14.1 | 80.2 | -39 | 51.5 |

### Comparative Example 9

The molecular sieve Z-E, macroporous alumina (with a specific surface area of 302 m²/g and a pore volume of 0.96 cm³/g), and an alumina sol binder were subjected to blending and kneading, extruding and molding, and subsequently subjected to drying and calcining to obtain a carrier; the carrier was impregnated in a nickel nitrate impregnation solution, and then subjected to drying and roasting to obtain the catalyst denoted as DC5; wherein the mass fraction of the ZSM-5 molecular sieve was 30wt%, the mass fraction of the macroporous alumina was 50wt%, the mass fraction of NiO was 10wt%, and the balance was the binder.

10g of the catalyst DC5 was weighed and placed in a fixed bed reactor, and the hydrodewaxing reaction was performed under the conditions comprising the reaction pressure of 6.0MPa, the hydrogen/oil volume ratio of 500:1, the liquid hourly volume space velocity of 10h⁻¹, and the reaction temperature of 340°C, wherein the properties of the raw materials were shown in Table 2, and the product distribution and properties were illustrated in Table 8.

**Table 8 Application results of the catalyst prepared by using the Z-E molecular sieve**

| No. of catalyst | Total liquid yield, wt% | Naphtha yield, wt% | Diesel yield, wt% | Diesel condensation point, °C | Cetane number of diesel |
|---|---|---|---|---|---|
| DC5 | 95.4 | 13.2 | 82.2 | -40 | 49.2 |

## Claims

1. A ZSM-5 molecular sieve, is **characterized in that** the ZSM-5 molecular sieve has a pyridine infrared total acid amount within the range of 0.03-0.40 mmol/g, and a di-tert-butylpyridine infrared total acid amount within the range of 0.002-0.02 mmol/g; and the mesoporous pore volume of the ZSM-5 molecular sieve accounts for 10-20% of the total pore volume, and/or in the ZSM-5 molecular sieve, the mesoporous pore volume of 2-10nm accounts for 70-95% of the total mesoporous pore volume.

2. The molecular sieve of claim 1, wherein the ZSM-5 molecular sieve has a pyridine infrared total acid amount within the range of 0.10-0.20 mmol/g, and a di-tert-butylpyridine infrared total acid amount within the range of 0.005-0.01 mmol/g; and/or
the ratio of the outer surface SiO₂/Al₂O₃ molar ratio of said ZSM-5 molecular sieve to the total SiO₂/Al₂O₃ molar ratio of said ZSM-5 molecular sieve is within the range of (2-100):1, preferably within the range of (5-30): 1; and/or
wherein the outer surface SiO₂/Al₂O₃ molar ratio of said ZSM-5 molecular sieve is within the range of 200-1,000, preferably within the range of 500-1,000; and/or
the total SiO₂/Al₂O₃ molar ratio of said ZSM-5 molecular sieve is within the range of 30-100, preferably within the range of 40-70.

3. A preparation method of the ZSM-5 molecular sieve of any one of claims 1-3, is **characterized in that** the method comprises the following steps:
(1) subjecting a raw material ZSM-5 molecular sieve to a hydrothermal treatment;
(2) removing non-framework aluminum in the molecular sieve obtained in step (1);
(3) impregnating the material obtained in step (2) with a pore canal protection solution;
(4) treating the material obtained in step (3) with an organic acid;
(5) mixing the material obtained in step (4) with a dealuminizing and silicon supplementing reagent to dealuminize and supplement silicon;
(6) filtering, washing, drying, and roasting the material obtained in step (5).

4. The method of claim 3, wherein in step (1),
the temperature of the hydrothermal treatment is within the range of 400-700°C, preferably within the range of 500-600°C;
preferably, the time of the hydrothermal treatment is within the range of 0.5-5h, more preferably within the range of 1-2h; and/or
the pressure of the hydrothermal treatment is within the range of 0.05-0.5MPa, more preferably within the range of 0.1-0.3MPa.

5. The method of claim 3 or 4, wherein in step (2),
removing non-framework aluminum with a buffer solution, wherein the buffer solution is a mixed solution of the weak acid and/or weak base and corresponding salt thereof;
preferably, the weak acid is an inorganic acid and/or an organic acid that has a molecular size of less than 0.5nm and can be removed in a mode of not damaging the structure of molecular sieve;
preferably, the inorganic acid is one or more of phosphoric acid, carbonic acid, and boric acid;
the inorganic acid salt is one or more of ammonium phosphate salt, ammonium carbonate salt, and ammonium borate salt;
the organic acid is selected from C2-C6 monobasic acid or polybasic acid, preferably one or more selected from the group consisting of citric acid, formic acid, acetic acid, oxalic acid, propionic acid, malonic acid, butyric acid, and succinic acid;
the organic acid salt is selected from C2-C6 monoacid or polybasic acid salts, preferably one or more selected from the group consisting of ammonium citrate, ammonium formate, ammonium acetate, ammonium oxalate, ammonium propionate, ammonium malonate, ammonium butyrate, and ammonium succinate;
more preferably, the buffer solution is one or more of oxalic acid-ammonium oxalate solution and acetic acid-ammonium acetate solution;
preferably,
wherein the pH of the buffer solution is within the range of 4.5-6.5; and/or
the molar concentration of acid in the buffer solution is within the range of 0.1-1.0 mol/L; and/or
the liquid-solid volume ratio of the buffer solution to the molecular sieve obtained in step (1) is within the range of 3: 1-10: 1.

6. The method of any one of claims 3-5, wherein the process of step (2) comprises:
mixing and stirring the molecular sieve obtained in step (1) and a buffer solution, and then carrying out a solid-liquid separation; optionally repeating the above operations 2-4 times; preferably, the treatment temperature is within the range of 40-80°C, and the treatment time is within the range of 0.5-3h; and/or
wherein in step (3),
the pore canal protecting agent of the pore canal protection solution is an inorganic alkali and/or an organic alkali that has a molecular size of less than 0.5nm and can be removed through roasting in a mode of not damaging the structure of molecular sieve;
preferably, the pore canal protecting agent is one or more selected from the group consisting of aqua ammonia, ethylenediamine, propylamine, tetramethylammonium hydroxide, tetraethylammonium hydroxide, tetrapropylammonium hydroxide, tetramethylammonium bromide, and tetraethylammonium bromide;
preferably, the pore canal protection solution is one or more selected from the group consisting of isopropylamine solution, tetraethylammonium hydroxide solution, and tetrapropylammonium hydroxide solution; and/or the concentration of the pore canal protection solution is within the range of 0.8-2.0 mol/L.

7. The method of any one of claims 3-6, wherein in step (3),
the impregnation is an equivalent-volume impregnation; and/or
the impregnation treatment temperature is within the range of 20-25°C.

8. The method of any one of claims 3-7, wherein in step (4),
the organic acid is an organic acid that has a molecular size within the range from 0.55nm to 2nm and can be removed through roasting in a mode of not damaging the structure of molecular sieve;
preferably, the organic acid is one or more selected from the group consisting of C7-C10 organic acid;
more preferably, the organic acid is one or more selected from the group consisting of 2-methylbenzoic acid, 2-methylbenzenesulfonic acid, 2,4-dimethylbenzenesulfonic acid, 2,4-dimethylbenzoic acid, 1,2,5-trimethylbenzenesulfonic acid, and 1,2,5-trimethylbenzoic acid;
further preferably, the organic acid is one or more of 2,4-dimethylbenzenesulfonic acid and 2,4-dimethylbenzoic acid.

9. The method of any one of claims 3-8, wherein the treatment process of step (4) comprises the following steps: mixing the material obtained in step (3) with water, preferably, the liquid-solid volume ratio of the water to the material obtained in step (3) is within the range of 2: 1-6: 1; and then adding an organic acid until the pH value of said solution is reduced to below 8, preferably within the range of 6.5-7.5.

10. The method of any one of claims 3-9, wherein in step (5),
the dealuminizing and silicon supplementing substance of the dealuminizing and silicon supplementing reagent is one or more selected from the group consisting of fluosilicic acid, fluosilicate, silicon halide and silicate ester, preferably one or more selected from the group consisting of ammonium hexafluorosilicate, fluosilicic acid, sodium fluosilicate, silicon tetrachloride, silicon tetrafluoride and ethyl orthosilicate;
more preferably, the dealuminizing and silicon supplementing reagent is at least one of the ammonium hexafluorosilicate solution and tetraethoxysilane solution; and/or
the molar concentration of the dealuminizing and silicon supplementing reagent is within the range of 0.3-1.0 mol/L; and/or
the quality ratio of the material obtained in step (4) to the dealuminizing and silicon supplementing reagent is within the range of 1: 1-1: 5; and/or
the mixing temperature is within the range of 60-100°C.

11. The method of any one of claims 3-10, wherein the operation procedure of step (5) comprises the following steps: heating the material obtained in step (4) to the temperature range of 60-100°C, continuously stirring, dropwise adding a dealuminizing and silicon supplementing reagent, and continuously stirring for 60-120min after completion of the dropwise adding process.

12. Use of the molecular sieve of any one of claims 1-2 as a carrier and/or a catalyst active component, preferably as a hydrogenation catalyst carrier.

13. A hydrotreatment catalyst, is **characterized in that** the hydrotreatment catalyst comprising a ZSM-5 molecular sieve of any one of claims 1-2 and a hydrogenation active component; preferably, the hydrogenation active component is one or more selected from the group consisting of the group VIB metals, the group VIIB metals, and the group VIII metals, preferably one or more selected from the group consisting of Pt, Pd, Ni, W, Mo and Co.

14. A hydrodewaxing catalyst, is **characterized in that** the catalyst comprises the ZSM-5 molecular sieve of any one of claims 1-2;
preferably, the hydrodewaxing catalyst comprises the ZSM-5 molecular sieve and the Group VIII metal component, wherein the ZSM-5 molecular sieve is contained in an amount of 30-90%, and the group VIII metal component is contained in an amount of 5-40% calculated in terms of oxide, based on the weight of said catalyst;
preferably, the hydrodewaxing catalyst comprises the ZSM-5 molecular sieve, alumina and Group VIII metal components, wherein the ZSM-5 molecular sieve is contained in an amount of 30-50%, the alumina is contained in an amount of 40-70%, and the Group VIII metal components are contained in an amount of 5-40% calculated in terms of oxide, based on the weight of said catalyst.

15. Use of the hydrodewaxing catalyst of claim 14 in the hydrodewaxing of oil products;
preferably, the oil product is a mixture of straight-run diesel oil, catalytic diesel oil, and/or coking diesel oil.

## Patentansprüche

1. ZSM-5-Molekularsieb, **dadurch gekennzeichnet, dass** das ZSM-5-Molekularsieb eine Pyridin-Infrarot-Gesamtsäuremenge im Bereich von 0,03-0,40 mmol/g und eine Di-tert-butylpyridin-Infrarot-Gesamtsäuremenge im Bereich von 0,002-0,02 mmol/g aufweist; und das mesoporöse Porenvolumen des ZSM-5-Molekularsiebs 10-20 % des gesamten Porenvolumens ausmacht und/oder im ZSM-5-Molekularsieb das mesoporöse Porenvolumen von 2-10 nm 70-95 % des gesamten mesoporösen Porenvolumens ausmacht.

2. Molekularsieb nach Anspruch 1, wobei das ZSM-5-Molekularsieb eine Pyridin-Infrarot-Gesamtsäuremenge im Bereich von 0,10-0,20 mmol/g und eine Di-tert-butylpyridin-Infrarot-Gesamtsäuremenge im Bereich von 0,005-0,01 mmol/g aufweist; und/oder
das Verhältnis des SiO₂/Al₂O₃-Molverhältnisses der Außenfläche des ZSM-5-Molekularsiebs zum Gesamt-SiO₂/Al₂O₃-Molverhältnis des ZSM-5-Molekularsiebs im Bereich von (2-100):1, vorzugsweise im Bereich von (5-30):1 liegt; und/oder
wobei das SiO₂/Al₂O₃-Molverhältnis der Außenfläche des ZSM-5-Molekularsiebs im Bereich von 200-1000, vorzugsweise im Bereich von 500-1000, liegt; und/oder
das Gesamt-SiO₂/Al₂O₃-Molverhältnis des ZSM-5-Molekularsiebs im Bereich von 30-100, vorzugsweise im Bereich von 40-70, liegt.

3. Verfahren zur Herstellung des ZSM-5-Molekularsiebs nach einem der Ansprüche 1-3, **dadurch gekennzeichnet, dass** das Verfahren die folgenden Schritte umfasst:
(1) Unterziehen eines ZSM-5-Molekularsieb-Rohmaterials einer hydrothermalen Behandlung;
(2) Entfernen von nicht zum Gerüst gehörendem Aluminium aus dem in Schritt (1) erhaltenen Molekularsieb;
(3) Imprägnieren des in Schritt (2) erhaltenen Materials mit einer Porenkanalschutzlösung;
(4) Behandeln des in Schritt (3) erhaltenen Materials mit einer organischen Säure;
(5) Mischen des in Schritt (4) erhaltenen Materials mit einem dealuminierenden und siliziumergänzenden Reagenz, um es zu dealuminisieren und mit Silizium zu ergänzen;
(6) Filtrieren, Waschen, Trocknen und Rösten des in Schritt (5) erhaltenen Materials.

4. Verfahren nach Anspruch 3, wobei in Schritt (1)
die Temperatur der hydrothermalen Behandlung im Bereich von 400-700 °C, vorzugsweise im Bereich von 500-600 °C, liegt;
vorzugsweise die Dauer der hydrothermalen Behandlung im Bereich von 0,5-5 h, mehr bevorzugt im Bereich von 1-2 h liegt; und/oder
der Druck der hydrothermalen Behandlung im Bereich von 0,05-0,5 MPa, mehr bevorzugt im Bereich von 0,1-0,3 MPa liegt.

5. Verfahren nach Anspruch 3 oder 4, wobei in Schritt (2):
nicht zum Gerüst gehörendes Aluminium mit einer Pufferlösung entfernt wird, wobei die Pufferlösung eine gemischte Lösung aus der schwachen Säure und/oder der schwachen Base und dem entsprechenden Salz davon ist;
vorzugsweise ist die schwache Säure eine anorganische Säure und/oder eine organische Säure, die eine Molekülgröße von weniger als 0,5 nm aufweist und in einer Weise entfernt werden kann, die die Struktur des Molekularsiebs nicht beschädigt;
vorzugsweise ist die anorganische Säure eine oder mehrere der folgenden:
Phosphorsäure, Kohlensäure und Borsäure;
das anorganische Säuresalz ist eines oder mehrere der folgenden:
Ammoniumphosphatsalz, Ammoniumcarbonatsalz und Ammoniumboratsalz;
die organische Säure ist ausgewählt aus C2-C6 einbasigen Säuren oder mehrbasigen Säuren, vorzugsweise eine oder mehrere ausgewählt aus der Gruppe bestehend aus Zitronensäure, Ameisensäure, Essigsäure, Oxalsäure, Propionsäure, Malonsäure, Buttersäure und Bernsteinsäure;
das organische Säuresalz ist ausgewählt aus Säuresalzen von C2-C6 einbasigen Säuren oder mehrbasigen Säuren, vorzugsweise eines oder mehrere aus der Gruppe bestehend aus Ammoniumcitrat, Ammoniumformiat, Ammoniumacetat, Ammoniumoxalat, Ammoniumpropionat, Ammoniummalonat, Ammoniumbutyrat und Ammoniumsuccinat;
mehr bevorzugt ist die Pufferlösung eine oder mehrere aus Oxalsäure-Ammoniumoxalat-Lösung und Essigsäure-Ammoniumacetat-Lösung;
vorzugsweise,
wobei der pH-Wert der Pufferlösung im Bereich von 4,5-6,5 liegt; und/oder
die molare Konzentration von Säure in der Pufferlösung im Bereich von 0,1-1,0 mol/L liegt; und/oder
das Flüssigkeits-Feststoff-Volumenverhältnis der Pufferlösung zu dem in Schritt (1) erhaltenen Molekularsieb im Bereich von 3:1-10:1 liegt.

6. Verfahren nach einem der Ansprüche 3-5, wobei der Prozess von Schritt (2) umfasst:
Mischen und Rühren des in Schritt (1) erhaltenen Molekularsiebs und einer Pufferlösung, gefolgt von einer Fest-Flüssig-Trennung; gegebenenfalls das 2- bis 4-malige Wiederholen der oben genannten Vorgänge; vorzugsweise liegt die Behandlungstemperatur im Bereich von 40-80 °C und die Behandlungszeit im Bereich von 0,5-3 h; und/oder
wobei in Schritt (3)
das Porenkanalschutzmittel der Porenkanalschutzlösung ein anorganisches Alkali und/oder ein organisches Alkali ist, das eine Molekülgröße von weniger als 0,5 nm aufweist und durch Rösten in einer Weise entfernt werden kann, die die Struktur des Molekularsiebs nicht beschädigt;
vorzugsweise ist das Porenkanalschutzmittel eines oder mehrere aus der Gruppe ausgewählt, die aus Ammoniakwasser, Ethylendiamin, Propylamin, Tetramethylammoniumhydroxid, Tetraethylammoniumhydroxid, Tetrapropylammoniumhydroxid, Tetramethylammoniumbromid und Tetraethylammoniumbromid besteht;
vorzugsweise ist die Porenkanalschutzlösung eine oder mehrere ausgewählt aus der Gruppe bestehend aus Isopropylaminlösung, Tetraethylammoniumhydroxidlösung und Tetrapropylammoniumhydroxidlösung; und/oder
die Konzentration der Porenkanalschutzlösung liegt im Bereich von 0,8-2,0 mol/L.

7. Verfahren nach einem der Ansprüche 3-6, wobei in Schritt (3)
die Imprägnierung eine Imprägnierung mit äquivalentem Volumen ist; und/oder
die Temperatur der Imprägnierungsbehandlung im Bereich von 20-25 °C liegt.

8. Verfahren nach einem der Ansprüche 3-7, wobei in Schritt (4)
die organische Säure eine organische Säure ist, die eine Molekülgröße im Bereich von 0,55 nm bis 2 nm aufweist und durch Rösten in einer Weise entfernt werden kann, die die Struktur des Molekularsiebs nicht beschädigt;
vorzugsweise ist die organische Säure eine oder mehrere ausgewählt aus der Gruppe bestehend aus C7-C10 organischen Säuren;
mehr bevorzugt ist die organische Säure eine oder mehrere ausgewählt aus der Gruppe bestehend aus 2-Methylbenzoesäure, 2-Methylbenzolsulfonsäure, 2,4-Dimethylbenzolsulfonsäure, 2,4-Dimethylbenzoesäure, 1,2,5-Trimethylbenzolsulfonsäure und 1,2,5-Trimethylbenzoesäure;
noch bevorzugter ist die organische Säure eine oder mehrere der folgenden: 2,4-Dimethylbenzolsulfonsäure und 2,4-Dimethylbenzoesäure.

9. Verfahren nach einem der Ansprüche 3-8, wobei der Behandlungsprozess von Schritt (4) die folgenden Schritte umfasst: Mischen des in Schritt (3) erhaltenen Materials mit Wasser, wobei vorzugsweise das Flüssigkeits-Feststoff-Volumenverhältnis von Wasser zu dem in Schritt (3) erhaltenen Material im Bereich von 2:1-6:1 liegt; und anschließendes Hinzufügen einer organischen Säure, bis der pH-Wert der Lösung auf unter 8, vorzugsweise in den Bereich von 6,5-7,5, abgesenkt ist.

10. Verfahren nach einem der Ansprüche 3-9, wobei in Schritt (5)
die dealuminierende und siliziumergänzende Substanz des dealuminierenden und siliziumergänzenden Reagenzes eine oder mehrere Substanzen ist, ausgewählt aus der Gruppe bestehend aus Fluorkieselsäure, Fluorsilikat, Siliziumhalogenid und Silikatester, vorzugsweise eine oder mehrere Substanzen, ausgewählt aus der Gruppe bestehend aus Ammoniumhexafluorosilikat, Fluorkieselsäure, Natriumfluorsilikat, Siliziumtetrachlorid, Siliciumtetrafluorid und Ethylorthosilikat; mehr bevorzugt ist das dealuminierende und siliziumergänzende Reagenz mindestens eines aus Ammoniumhexafluorosilikat-Lösung und Tetraethoxysilan-Lösung; und/oder
die molare Konzentration des dealuminierenden und siliziumergänzenden Reagenzes liegt im Bereich von 0,3-1,0 mol/L; und/oder
das Gewichtsverhältnis des in Schritt (4) erhaltenen Materials zum dealuminierenden und siliziumergänzenden Reagenz liegt im Bereich von 1:1-1:5; und/oder
die Mischtemperatur liegt im Bereich von 60-100 °C.

11. Verfahren nach einem der Ansprüche 3-10, wobei der Arbeitsablauf von Schritt (5) die folgenden Schritte umfasst: Erhitzen des in Schritt (4) erhaltenen Materials auf den Temperaturbereich von 60-100 °C, kontinuierliches Rühren, tropfenweise Zugabe eines dealuminierenden und siliziumergänzenden Reagenzes und kontinuierliches Rühren für 60-120 min nach Beendigung des tropfenweisen Zugabevorgangs.

12. Verwendung des Molekularsiebs nach einem der Ansprüche 1-2 als Träger und/oder als katalytisch aktive Komponente, vorzugsweise als Träger für einen Hydrierungskatalysator.

13. Hydrotreating-Katalysator, **dadurch gekennzeichnet, dass** der Hydrotreating-Katalysator ein ZSM-5-Molekularsieb nach einem der Ansprüche 1-2 und eine aktive Hydrierungskomponente umfasst; vorzugsweise ist die aktive Hydrierungskomponente eine oder mehrere ausgewählt aus der Gruppe bestehend aus den Metallen der Gruppe VIB, den Metallen der Gruppe VIIB und den Metallen der Gruppe VIII, vorzugsweise eine oder mehrere ausgewählt aus der Gruppe bestehend aus Pt, Pd, Ni, W, Mo und Co.

14. Hydroentparaffinierungskatalysator, **dadurch gekennzeichnet, dass** der Katalysator das ZSM-5-Molekularsieb nach einem der Ansprüche 1-2 umfasst; vorzugsweise umfasst der Hydroentparaffinierungskatalysator das ZSM-5-Molekularsieb und die Metallkomponente der Gruppe VIII, wobei das ZSM-5-Molekularsieb in einer Menge von 30-90 % und die Gruppe VIII-Metallkomponente in einer Menge von 5-40 %, berechnet als Oxid, bezogen auf das Gewicht des Katalysators, enthalten sind;
vorzugsweise umfasst der Hydroentparaffinierungskatalysator das ZSM-5-Molekularsieb, Aluminiumoxid und Gruppe-VIII-Metallkomponenten, wobei das ZSM-5-Molekularsieb in einer Menge von 30-50 % enthalten ist, das Aluminiumoxid in einer Menge von 40-70 % enthalten ist und die Gruppe-VIII-Metallkomponenten in einer Menge von 5-40 % enthalten sind, berechnet als Oxid, bezogen auf das Gewicht des Katalysators.

15. Verwendung des Hydroentparaffinierungskatalysators nach Anspruch 14 bei der Hydroentparaffinierung von Ölprodukten;
vorzugsweise ist das Ölprodukt eine Mischung aus Straight-Run-Dieselöl, katalytischem Dieselöl und/oder kokendem Dieselöl.

## Revendications

1. Tamis moléculaire ZSM-5 **caractérisé en ce que** le tamis moléculaire ZSM-5 a une quantité totale d'acide infrarouge de pyridine comprise entre 0,03 et 0,40 mmol/g, et une quantité totale d'acide infrarouge de di-tert-butylpyridine comprise entre 0,002 et 0,02 mmol/g.02 mmol/g ; et le volume des pores mésoporeux du tamis moléculaire ZSM-5 représente 10 à 20 % du volume total des pores, et/ou dans le tamis moléculaire ZSM-5, le volume des pores mésoporeux de 2 à 10 nm représente 70 à 95 % du volume total des pores mésoporeux.

2. Tamis moléculaire selon la revendication 1, dans lequel le tamis moléculaire ZSM-5 a une quantité totale d'acide infrarouge de pyridine comprise entre 0,10 et 0,20 mmol/g, et une quantité totale d'acide infrarouge de di-tert-butylpyridine comprise entre 0,005 et 0,01 mmol/g ; et/ou
le rapport du rapport molaire SiO₂/Al₂O₃ de la surface extérieure dudit tamis moléculaire ZSM-5 au rapport molaire SiO₂/Al₂O₃ total dudit tamis moléculaire ZSM-5 se situe dans la plage de (2-100):1, de préférence dans la plage de (5-30): 1 ; et/ou
dans lequel le rapport molaire SiO₂/Al₂O₃ de la surface extérieure dudit tamis moléculaire ZSM-5 est compris entre 200 et 1 000, de préférence entre 500 et 1 000 ; et/ou
le rapport molaire SiO₂/Al₂O₃ total dudit tamis moléculaire ZSM-5 est compris entre 30 et 100, de préférence entre 40 et 70.

3. Procédé de préparation du tamis moléculaire ZSM-5 selon l'une quelconque des revendications 1 à 3, **caractérisé en ce que** le procédé comprend les étapes suivantes :
(1) soumettre un tamis moléculaire ZSM-5 de matière première à un traitement hydrothermique ;
(2) éliminer l'aluminium extra-réseau dans le tamis moléculaire obtenu à l'étape (1) ;
(3) imprégner le matériau obtenu à l'étape (2) d'une solution de protection du canal des pores ;
(4) traiter la matière obtenue à l'étape (3) avec un acide organique ;
(5) mélanger le matériau obtenu à l'étape (4) avec un réactif de désaluminisation et de supplémentation en silicium pour désaluminiser et supplémenter en silicium ;
(6) filtrer, laver, sécher et torréfier le matériau obtenu à l'étape (5).

4. Procédé selon la revendication 3, dans lequel à l'étape (1),
la température du traitement hydrothermique est comprise entre 400 et 700°C, de préférence entre 500 et 600°C ;
de préférence, la durée du traitement hydrothermique est comprise entre 0,5 et 5 heures, de préférence entre 1 et 2 heures ; et/ou
la pression du traitement hydrothermique est comprise entre 0,05 et 0,5 MPa, de préférence entre 0,1 et 0,3 MPa.

5. Procédé selon la revendication 3 ou 4, dans lequel, à l'étape (2), on élimine l'aluminium extra-réseau avec une solution tampon, la solution tampon étant une solution mixte d'acide faible et/ou de base faible et de leur sel correspondant ;
de préférence, l'acide faible est un acide inorganique et/ou un acide organique dont la taille moléculaire est inférieure à 0,5 nm et qui peut être éliminé sans endommager la structure du tamis moléculaire ;
de préférence, l'acide inorganique est l'un ou plusieurs des acides phosphorique, carbonique et borique ;
le sel d'acide inorganique est un ou plusieurs des sels de phosphate d'ammonium, de carbonate d'ammonium et de borate d'ammonium ;
l'acide organique est choisi parmi les acides monobasiques ou polybasiques en C2-C6, de préférence un ou plusieurs choisis dans le groupe constitué par l'acide citrique, l'acide formique, l'acide acétique, l'acide oxalique, l'acide propionique, l'acide malonique, l'acide butyrique et l'acide succinique ;
le sel d'acide organique est choisi parmi les sels d'acides monoacides ou polybasiques en C2-C6, de préférence un ou plusieurs sels choisis dans le groupe constitué par le citrate d'ammonium, le formiate d'ammonium, l'acétate d'ammonium, l'oxalate d'ammonium, le propionate d'ammonium, le malonate d'ammonium, le butyrate d'ammonium et le succinate d'ammonium ;
de préférence, la solution tampon est une ou plusieurs solutions d'acide oxalique et d'oxalate d'ammonium et une solution d'acide acétique et d'acétate d'ammonium ;
de préférence,
dans lequel le pH de la solution tampon est compris entre 4,5 et 6,5 ; et/ou
la concentration molaire d'acide dans la solution tampon est comprise entre 0,1 et 1,0 mol/L ; et/ou
le rapport volumétrique liquide-solide entre la solution tampon et le tamis moléculaire obtenu à l'étape (1) est compris entre 3: 1 et 10: 1.

6. Procédé selon l'une quelconque des revendications 3 à 5, dans lequel le processus de l'étape (2) comprend :
le mélange et l'agitation du tamis moléculaire obtenu à l'étape (1) et une solution tampon, puis la réalisation d'une séparation solide-liquide ; la répétition éventuelle des opérations ci-dessus 2 à 4 fois ; de préférence, la température de traitement est comprise entre 40 et 80°C, et la durée de traitement est comprise entre 0,5 et 3 heures ; et/ou
dans lequel à l'étape (3),
l'agent de protection du canal poreux de la solution de protection du canal poreux est un alcali inorganique et/ou un alcali organique dont la taille moléculaire est inférieure à 0,5 nm et qui peut être éliminé par torréfaction sans endommager la structure du tamis moléculaire ;
de préférence, l'agent de protection du canal poreux est un ou plusieurs agents choisis dans le groupe constitué de l'ammoniac en solution aqueuse, de l'éthylènediamine, de la propylamine, de l'hydroxyde de tétraméthylammonium, de l'hydroxyde de tétraéthylammonium, de l'hydroxyde de tétrapropylammonium, du bromure de tétraméthylammonium et du bromure de tétraéthylammonium ;
de préférence, la solution de protection du canal poreux est une ou plusieurs solutions choisies dans le groupe constitué par la solution d'isopropylamine, la solution d'hydroxyde de tétraéthylammonium et la solution d'hydroxyde de tétrapropylammonium ; et/ou la concentration de la solution de protection du canal poreux est comprise entre 0,8 et 2,0 mol/L.

7. Procédé selon l'une quelconque des revendications 3 à 6, dans lequel, à l'étape (3), l'imprégnation est une imprégnation à volume équivalent ; et/ou la température de traitement de l'imprégnation est comprise entre 20 et 25°C.

8. Procédé selon l'une quelconque des revendications 3 à 7, dans lequel à l'étape (4), l'acide organique est un acide organique dont la taille moléculaire est comprise entre 0,55 et 2 nm et qui peut être éliminé par torréfaction sans endommager la structure du tamis moléculaire ;
de préférence, l'acide organique est un ou plusieurs acides organiques en C7-C10 ;
de préférence, l'acide organique est un ou plusieurs acides choisis dans le groupe constitué par l'acide 2-méthylbenzoïque, l'acide 2-méthylbenzènesulfonique, l'acide 2,4-diméthylbenzènesulfonique, l'acide 2,4-diméthylbenzoïque, l'acide 1,2,5-triméthylbenzènesulfonique et l'acide 1,2,5-triméthylbenzoïque ;
de préférence, l'acide organique est l'un ou plusieurs des acides 2,4-diméthylbenzènesulfonique et 2,4-diméthylbenzoïque.

9. Procédé selon l'une quelconque des revendications 3 à 8, dans lequel le processus de traitement de l'étape (4) comprend les étapes suivantes : mélanger le matériau obtenu à l'étape (3) avec de l'eau, de préférence, le rapport volumétrique liquide-solide de l'eau au matériau obtenu à l'étape (3) est compris entre 2: 1-6: 1 ; puis ajouter un acide organique jusqu'à ce que la valeur du pH de ladite solution soit inférieure à 8, de préférence entre 6,5 et 7,5.

10. Procédé selon l'une quelconque des revendications 3 à 9, dans lequel, à l'étape (5), la substance de désaluminisation et de supplémentation en silicium du réactif de désaluminisation et de supplémentation en silicium est une ou plusieurs substances choisies dans le groupe constitué par l'acide fluosilicique, le fluosilicate, l'halogénure de silicium et l'ester de silicate, de préférence une ou plusieurs substances choisies dans le groupe constitué par l'hexafluorosilicate d'ammonium, l'acide fluosilicique, le fluosilicate de sodium, le tétrachlorure de silicium, le tétrafluorure de silicium et l'orthosilicate d'éthyle ; de préférence, le réactif de désaluminisation et de supplémentation en silicium est au moins l'une des solutions d'hexafluorosilicate d'ammonium et de tétraéthoxysilane ; et/ou la concentration molaire du réactif de désaluminisation et de supplémentation en silicium est comprise entre 0,3 et 1,0 mol/L ; et/ou
le rapport de qualité entre le matériau obtenu à l'étape (4) et le réactif de désaluminisation et de supplémentation en silicium est compris entre 1: 1-1:5 ; et/ou la température de mélange est comprise entre 60 et 100°C.

11. Procédé selon l'une quelconque des revendications 3 à 10, dans lequel la procédure d'opération de l'étape (5) comprend les étapes suivantes : chauffer le matériau obtenu à l'étape (4) à une température comprise entre 60 et 100°C, agiter continuellement, ajouter goutte à goutte un réactif de désaluminisation et de supplémentation en silicium, et agiter continuellement pendant 60 à 120 minutes après l'achèvement du processus d'ajout goutte à goutte.

12. Utilisation du tamis moléculaire selon l'une quelconque des revendications 1 à 2 comme support et/ou composant actif de catalyseur, de préférence comme support de catalyseur d'hydrogénation.

13. Catalyseur d'hydrotraitement, **caractérisé en ce que** le catalyseur d'hydrotraitement comprend un tamis moléculaire ZSM-5 selon l'une quelconque des revendications 1 à 2 et un composant actif d'hydrogénation ; de préférence, le composant actif d'hydrogénation est un ou plusieurs choisis dans le groupe constitué des métaux du groupe VIB, des métaux du groupe VIIB et des métaux du groupe VIII, de préférence un ou plusieurs choisis dans le groupe constitué par Pt, Pd, Ni, W, Mo et Co.

14. Catalyseur d'hydrodéparaffinage, **caractérisé en ce que** le catalyseur comprend le tamis moléculaire ZSM-5 selon l'une quelconque des revendications 1 à 2 ;
de préférence, le catalyseur d'hydrodéparaffinage comprend le tamis moléculaire ZSM-5 et le composant métallique du groupe VIII, le tamis moléculaire ZSM-5 étant contenu dans une proportion de 30 à 90 % et le composant métallique du groupe VIII étant contenu dans une proportion de 5 à 40 % calculée en termes d'oxyde, sur la base du poids dudit catalyseur ;
de préférence, le catalyseur d'hydrodéparaffinage comprend le tamis moléculaire ZSM-5, l'alumine et les composants métalliques du groupe VIII, le tamis moléculaire ZSM-5 étant contenu dans une proportion de 30 à 50 %, l'alumine dans une proportion de 40 à 70 % et les composants métalliques du groupe VIII dans une proportion de 5 à 40 % calculée en termes d'oxyde, sur la base du poids dudit catalyseur.

15. Utilisation du catalyseur d'hydrodéparaffinage selon la revendication 14 dans l'hydrodéparaffinage de produits pétroliers ;
de préférence, le produit pétrolier est un mélange de gazole de distillation directe, de gazole catalytique et/ou de gazole de cokéfaction.
